Europäisches Patentamt

European Patent Office

Office européen des brevets

(11) Publication number: **0 480 157 A1**

## EUROPEAN PATENT APPLICATION

(21) Application number: **91114370.9**

(22) Date of filing: **27.08.91**

(51) Int. Cl.5: **H04B 7/10**

(30) Priority: **07.09.90 US 579145**

(43) Date of publication of application:
**15.04.92 Bulletin 92/16**

(84) Designated Contracting States:
**DE ES FR GB IT NL SE**

(71) Applicant: **ALCATEL N.V.**
**Strawinskylaan 341 (World Trade Center)**
**NL-1077 XX Amsterdam(NL)**

(72) Inventor: **Bode, Udo H.**
**24 Barker Place**
**Branford, Connecticut(US)**

(74) Representative: **Pohl, Herbert, Dipl.-Ing et al**
**Standard Elektrik Lorenz AG Patent- und**
**Lizenzwesen Postfach 30 09 29**
**W-7000 Stuttgart 30(DE)**

(54) **Angle diversity antenna with phased array feed.**

(57) An angle diversity antenna has a phased array feed (12) for producing multiple radiation patterns from the same reflector at slightly different launch angles. The phased array feed comprises a plurality of radiating elements and allows the radiation pattern, or antenna beam, to be electronically changed to receive the strongest RF signal, which may have been refracted by atmospheric conditions. The microwave signal is reflected to a point (42) offset from focal point (14). Array elements (12) are phase aligned for receipt of the signal at point (42). Microwave switches or adjustable microwave phase shifters may be used for shifting the antenna launch angle. A capacitive probe (20), for instance, may be used to sense the power of the received signal. Control unit (24) is connected to phase shifters in the feed (12) by control cables (26).

FIG. 4

FIG.5

## Field of the Invention

The present invention relates to microwave communications systems and more particularly to an angle diversity antenna utilizing a phased array feed for changing the antenna main beam angle corresponding to changes in atmospheric conditions.

## Description of the Prior Art

Transmissions at microwave frequencies are very susceptible to weather effects, particularly rain, because each rain drop can act as a small antenna in itself, absorbing or deflecting the microwave energy rather than allowing it to reach its destination. In passing through the atmosphere, radio waves may be attenuated by two basic mechanisms: absorption and scattering. Absorption, which is mainly due to oxygen and water vapor, is the result of the oxygen and water vapor absorbing the microwave energy, most severely at the resonant frequencies of the oxygen and water vapor. Scattering, which is due almost entirely to condensed water vapor (e.g., raindrops) results in the deflection of the radio waves, thus resulting in the propagation of the radio waves in different directions and angles than when initially transmitted.

In addition, in those systems which utilize line-of-sight antennas, that is, communication systems which depend upon antennas using an electromagnetic wave propagation path with a calculated amount of atmospheric refraction, atmospheric disturbances such as solar radiation may cause the transmitted signal to be refracted differently at different times. The refraction of the propagation path may be so great that the antennas may not be able to "see" each other. Thus, the effects of weather upon a microwave communications system can become so severe as to make the system unreliable.

Various methods for increasing the microwave communication system reliability are known, the three most practical being frequency diversity, space diversity, and, most recently, angle diversity systems. Each of the three approaches utilizes one or more variables for guarding against the effects of changing atmospheric conditions.

In frequency diversity systems, the microwave signal is switched from one frequency channel to another when the system detects that the signal is fading, or being attenuated, below a predetermined level. Because the atmospheric effects are frequency dependent, the switching of the frequency channels can effectively be utilized to minimize atmospheric interference. The frequency diversity system approach, however, requires that the bandwidth of the system be doubled, thus making it impractical in frequency congested areas.

Space diversity systems utilize two individual receiver antennas, each antenna physically separated from the other. It is unlikely that both antennas are affected simultaneously by the fading due to the atmospheric effects. The microwave signal will therefore be subject to greater fading at one antenna location than the other. Thus, the communication system can be made more reliable by switching to the receiver antenna with the highest input signal. This is a common approach but increases the cost of the microwave communication tower, and doubles the number of the required antennas.

Angle diversity systems take advantage of the fact that the angle of the incident incoming microwave signal varies with the atmospheric conditions, that is, the radio waves are deflected by the irregularities or discontinuities in the physical properties of the atmosphere and are propagated with different curvatures than when initially transmitted. Present angle diversity systems utilize an antenna having a feed with two vertically spaced apertures, one being located in the focal point of the antenna, the other being out of the focal point and directed at an angle relative to the first aperture. The type of apertures used are normally of the open end waveguide type. This antenna type, having a feed with two vertically spaced apertures, can not only receive those microwave signals which are not affected during transmission, but can also receive those signals which are refracted to the extent of the second, non-focal point, aperture.

However, this antenna type has two disadvantages. First, because of the size of the apertures, the proximity of the apertures is limited. Thus, the angle between the apertures cannot be decreased to an optimum. Secondly, because the amount of hardware located in the antenna dish and, thus, in the radio signal transmission path, is effectively doubled, there is greater blockage of the radio signal transmission. This causes a lowering of the antenna gain as well as a degrading of the radiation patterns. High antenna gain and highly directive radiation patterns are crucial for a reliable communications system.

## SUMMARY OF THE INVENTION

The present invention is designed to overcome the limitations that are attendant upon the use of traditional devices for overcoming atmospheric variations in microwave communications systems, and, toward this end, it contemplates the provision of a novel antenna utilizing a phased array feed for changing the antenna main beam angle corresponding to changes in atmospheric conditions.

The present invention comprises an angle diversity antenna, that is, an antenna in a microwave communication system which can produce main beams from the same reflector at slightly different angles, the antenna in this case utilizing a phased array feed. The phased array feed, which consists of a plurality of radiating elements, allows the radiation pattern, or antenna beam, to be electronically changed to receive the strongest RF signal. The radio waves, which are subject to the changes in atmospheric conditions, are sometimes refracted by solar radiation or other atmospheric variations thus resulting in wave propagation in elevation angles different from those as originally transmitted. The phased array feed allows for the electronic compensation of such atmospheric effects.

In one embodiment, the present invention contemplates the use of two or more groups of phased array radiating elements, each group having a slightly different main beam angle. In this embodiment, one group of elements is in the focal point of the antenna reflector and has a corresponding main beam angle for transmitting and receiving radio signals when little or no atmospheric disturbances exist. The remaining group or groups of radiating elements are located out of the reflector focal point and have main beam angles which are slightly offset from the first radiating element group.

A signal strength detector, such as a capacitive probe, is utilized to detect the strength of the received signal. A system of switches, such as pin-diode switches, is used to switch the receiver to the group of elements receiving the strongest signal. Because the radiating elements in the phased array can be located in very close proximity to one another, the angular offset can be minimized thereby maximizing angular flexibility. In addition, because the phased array feed is smaller than two conventional waveguide feeds, there is less blockage of the transmission signal.

In another embodiment, a single group of radiating elements is utilized, the group being positioned slightly out of the focal point of the reflector. Phase shifters, which may be mounted within the feed itself or behind the reflector, are used to shift the antenna beam in the direction for receiving the microwave signal with the highest power level. The phased array feed in this embodiment is even smaller in size than in the first embodiment, further reducing blockage.

In an alternative second embodiment, delay lines, which induce a predetermined or manually adjustable phase shift on the microwave signal, are switched into or out of the transmission path of the microwave signal for shifting the main beam in the direction of maximum signal strength.

It is an object of the invention to provide a microwave antenna for receiving and transmitting radio signals, the antenna having a phased array feed for changing the antenna main beam angle corresponding to changes in atmospheric conditions.

Another object of the present invention is to provide such an antenna having a phased array feed with two or more groups of radiating elements, each group having a main beam angle slightly offset from each other.

A further object of the present invention is to provide such an antenna having a signal strength detector and a control unit for switching to the group of radiating elements receiving the strongest signal.

Another object of the present invention is to provide an antenna having a phased array feed with a single group of radiating elements, the group of radiating elements having a main beam angle which may be electronically shifted to maximize the antenna receiving capability during atmospheric variations.

Another object of the present invention is to provide such an antenna having a signal strength detection and control means for electronically stepping the antenna main beam angle for maximizing received signal strength.

A further object is to provide such a device which may be readily and economically fabricated and will enjoy a long life in operation.

The above and other objectives and advantages of the invention will become more apparent upon reading the description of the invention with the drawings described below.

## DESCRIPTION OF THE DRAWINGS

Figure 1 is diagram illustrating a first embodiment of the present invention showing an angle diversity antenna with a phased array feed incorporating two groups of radiating elements.

Figure 2 is a frontal view of the phased array feed of the first embodiment showing the two groups of radiating elements.

Figure 3 is a block diagram of the first embodiment of the present invention.

Figure 4 illustrates an angle diversity antenna having a phased array feed of the first embodiment, the antenna receiving an unrefracted signal.

Figure 5 illustrates the same antenna receiving a refracted signal.

Figure 6 is a diagram illustrating a second embodiment of the present invention showing an angle diversity antenna with phased array feed incorporating a single group of radiating elements located slightly out of the focal point of the reflector.

Figure 7 is a frontal view of the phased array feed of the second embodiment.

Figure 8 is a block diagram of the second embodiment of the present invention.

Figure 9 is a block diagram of an alternative second embodiment of the present invention.

## DESCRIPTION OF THE PREFERRED EMBODIMENTS

### First Preferred Embodiment

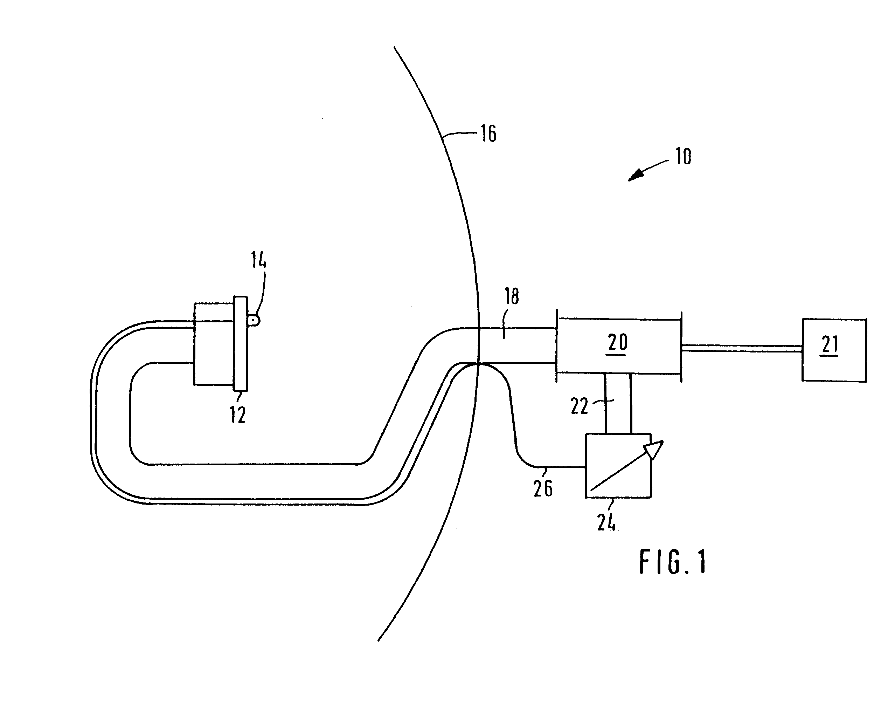

Figure 1 illustrates a first embodiment of an angle diversity antenna with a phased array feed of the present invention. The angle diversity antenna 10 of the first embodiment comprises a phased array feed 12 located partially in and partially offset from the focal point 14 of a parabolic shaped reflector 16. It should be noted that the same principle may be used for offset fed and cassegrain antennas. The angle diversity antenna system 10 further comprises a transmission line 18, normally a coaxial cable or a waveguide, an RF coupler 20, an RF signal strength detector 22 and a signal strength control unit 24. Signal strength control unit 24 is connected to phased array feed 12 by control cables 26.

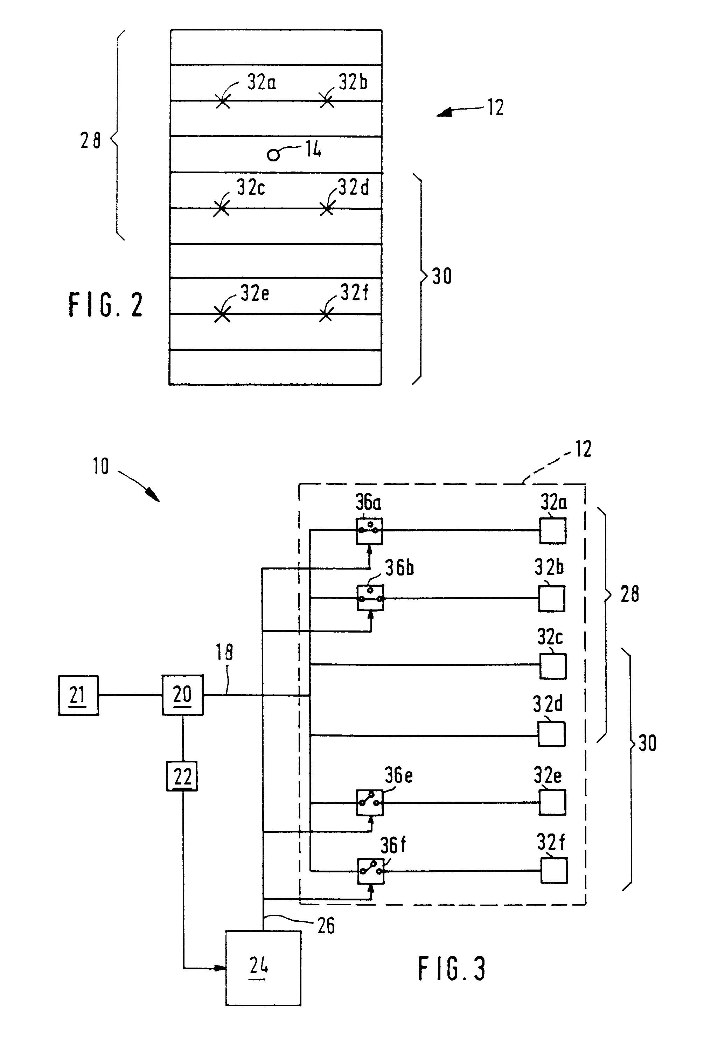

Referring now to Figure 2, therein is illustrated a frontal view of the phased array feed 14 of the first embodiment. The phased array feed 14 is substantially planer in shape and comprises two groups of radiating elements, a first boresight group 28 and a second offset group 30. It should be noted that additional groups of radiating elements may be added to the phased array feed 12 for maximizing angular flexibility. Each group 28, 30 comprises four radiating elements, the boresight group 28 comprising radiating elements 32a, 32b, 32c, and 32d, the offset group 30 comprising radiating elements 32e and 32f and sharing radiating elements 32c and 32d with boresight group 28. Four radiating elements in each group are used as an example and different numbers of elements may be used and feed 12 will still function properly. The radiating elements of the phased array feed 12 may consist of waveguide radiators, but are preferably comprised of microstrip lines printed on a printed circuit board (PCB). Additionally, the radiating elements may be fabricated using gallium arsenide (GaAs) or similar technologies if combined with switches.

The radiating elements 32a, 32b, 32c, and 32d of the boresight group 28 are located symmetrically about the antenna focal point 14. The radiating elements 32c, 32d, 32e, and 32f of the offset group 30, on the other hand, are offset from the antenna focal point 14.

Referring now to Figure 3, therein is illustrated a block diagram of the angle diversity antenna 10 having a phased array feed 12 of the present invention. The phased array feed 12 comprises two groups of radiating elements 28, 30 as was discussed hereinabove, and additionally comprises a plurality of microwave switches. Connected to each radiating element 32a, 32b, 32e, and 32f, is a corresponding microwave switch 36a, 36b, 36e, and 36f. The microwave switches, which, for example, may be PIN diode switches, are controlled via control cables 26 by the signal strength control unit 24. The transmitted or received RF signal is conveyed to and from the phased array feed 12 by RF transmission line 18.

The angle diversity antenna 10 can operate in two modes: a "receive" mode wherein the antenna system receives a microwave signal from another communication system; and a "transmit" mode wherein the antenna system 10 transmits a microwave signal to another communication system. For clarity, the present invention will be discussed in the receive mode only, although the system works in substantially the same manner in the transmit mode.

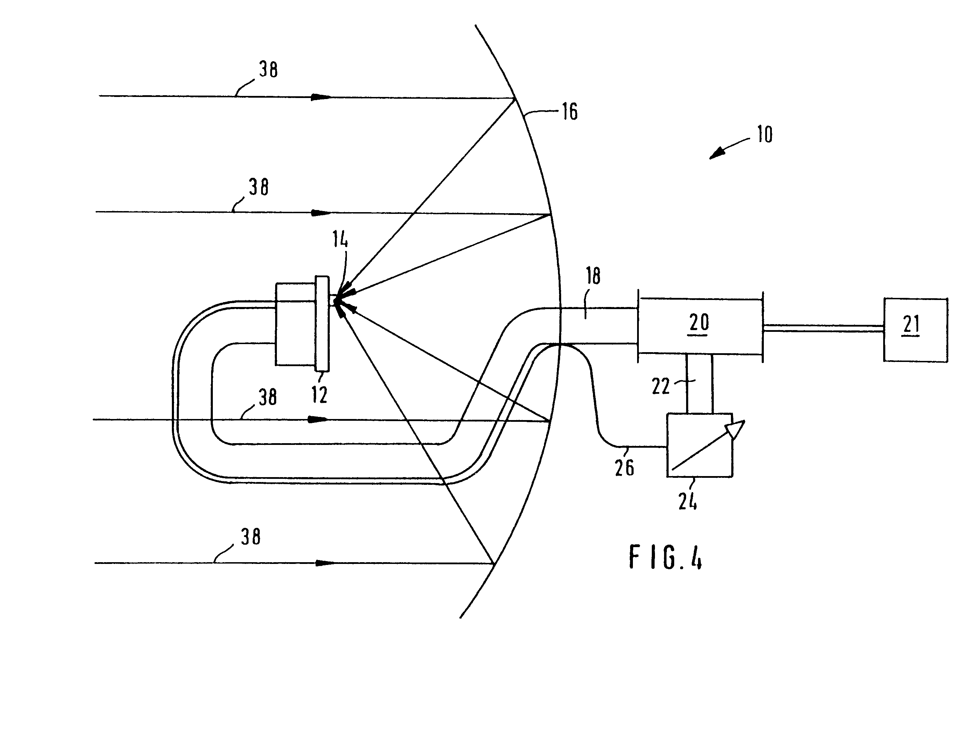

The first embodiment of the angle diversity antenna system 10 of the present invention operates as follows. Referring first to Figure 4, a microwave signal unaffected by atmospheric conditions has a wavefront direction as indicated by arrows 38. The microwave signal is reflected off reflector 16 into focal point 14 of reflector 16 where boresight group 28 is located (see Figure 2). The signal at focal point 14 is received by radiating elements 32a, 32b, 32c, and 32d, which are phase aligned for receipt of the microwave signal at focal point 14.

As can be seen in Figure 3, the microwave signal, which is then transmitted via RF transmission line 18 to receiver/transmitter 21, is detected by signal strength detector 22 subsequent to being coupled off by RF coupler 20. If signal strength detector 22 senses a signal strength below a predetermined level, signal strength control unit 24 toggles switches 36a, 36b, 36e, and 36f so that offset group 30 is activated.

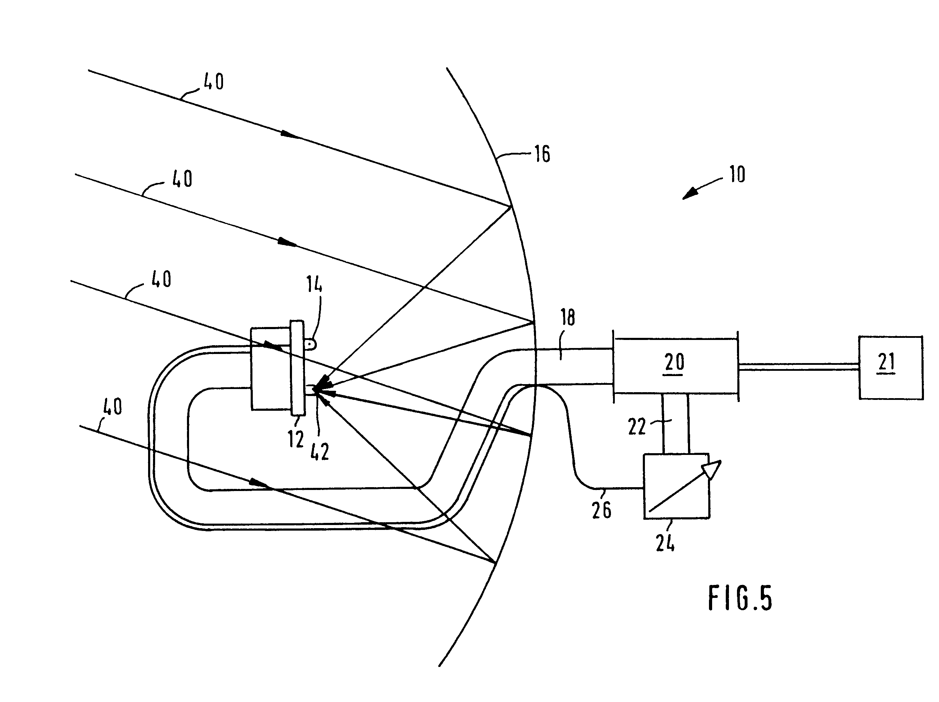

Referring now to Figure 5, a microwave signal which is refracted by atmospheric conditions has a wavefront direction as indicated by arrows 40. The microwave signal is reflected off reflector 16 to a point 42 offset from focal point 14. Radiating elements 32c, 32d, 32e, and 32f of group 30 are phase aligned for receipt of the radio signal at point 42.

Although the extent of the refraction of the microwave signal determines at which point on antenna feed 12 the signal will be strongest, the amount of refraction is generally calculable. Points of alignment for the offset groups are chosen for optimum system reliability.

Various configurations of the angle diversity antenna 10 may be utilized, that is, microwave switches 36a, 36b, 36e, 36f, RF coupler 20, signal strength detector 22, etc., may be mounted out of the way behind the reflector 16, or, conversely, mounted directly behind feed 12.

Thus, the first embodiment of the angle diversity antenna of the present invention adds reliability for line-of-sight communications systems by switching the antenna launch angle for receipt of strongest radio signal corresponding to changes in atmospheric conditions.

## Second Preferred Embodiment

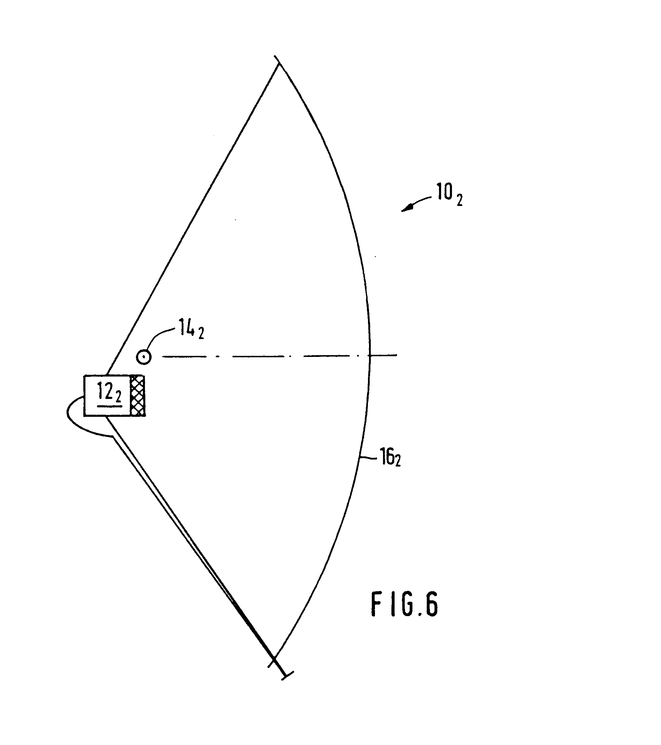

Figure 6 illustrates a second embodiment of the angle diversity antenna with a phased array feed of the present invention. For clarity, identical components of the first and second embodiments will be identified with the same numeral with an additional subscript 2. The angle diversity antenna $10_2$ of the second embodiment comprises a phased array feed $12_2$ mounted slightly offset from the focal point $14_2$ of the reflector $16_2$. As in the first embodiment, the angle diversity antenna $10_2$ also comprises a transmission line $18_2$, an RF coupler $20_2$, an RF signal strength detector $22_2$ and a signal strength control unit $24_2$. These components are not shown in Figure 6 as they are mounted within feed $12_2$.

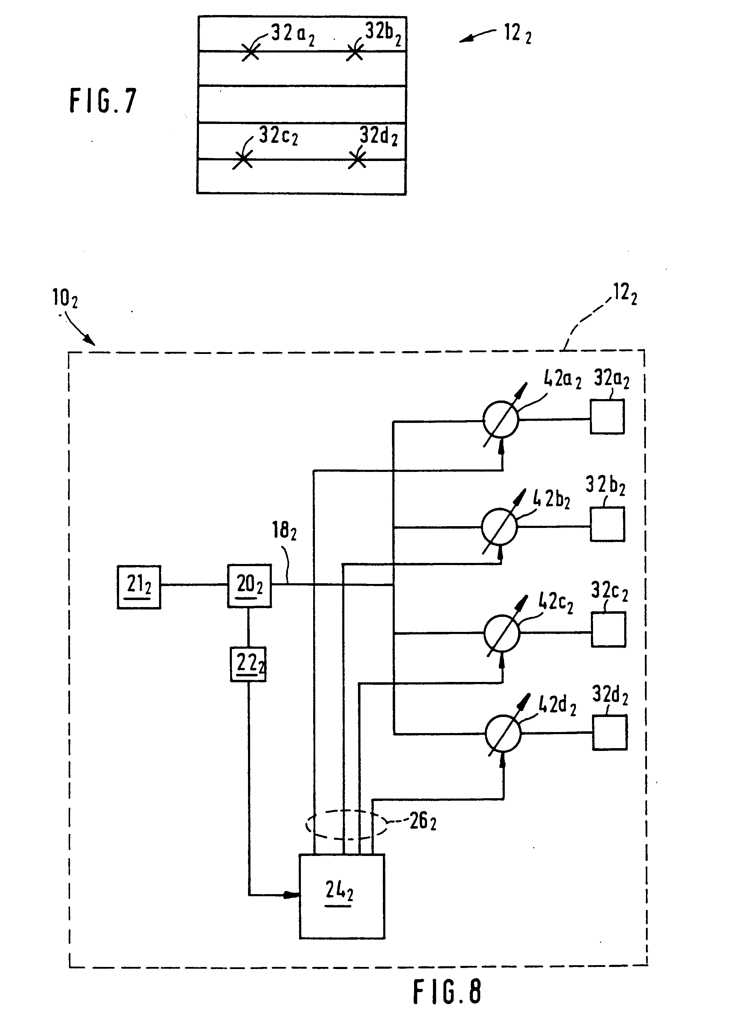

Figure 7 illustrates a frontal view of the phased array feed $12_2$ of the second embodiment. As in the first embodiment, the phased array feed $12_2$ is substantially planer in shape but comprises a single group of radiating elements, $32a_2$, $32b_2$, $32c_2$, and $32d_2$. Although four radiating elements are used as an example, other numbers of radiating elements may be used in the feed and the feed will still function properly.

Figure 8 illustrates a block diagram of the angle diversity antenna $10_2$ having a phased array feed $12_2$. Each of the four radiating elements $32a_2$, $32b_2$, $32c_2$, and $32d_2$ is connected to a corresponding adjustable phase shifter $42a_2$, $42b_2$, $42c_2$, and $42d_2$. Phase shifters $42a_2$, $42b_2$, $42c_2$, and $42d_2$, which are voltage or current controlled, that is, the amount of phase shift applied to the RF signal can be remotely controlled by applying a voltage potential or current flow to an input of the phase shifters, are utilized to electronically shift the antenna main beam angle so that the maximum signal input may be received.

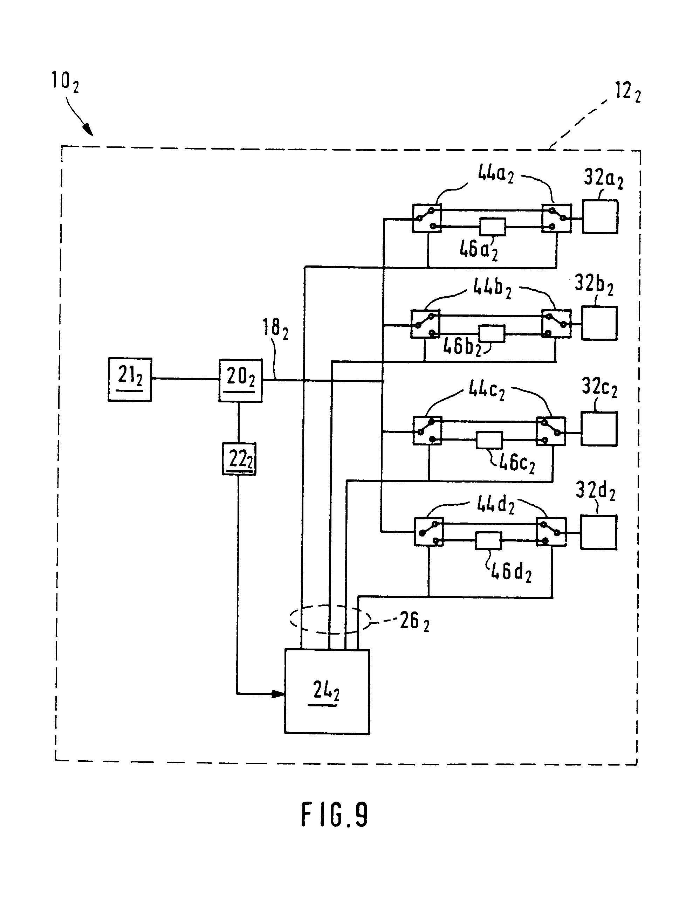

A block diagram of an alternative second embodiment is shown in Figure 9. Each of the radiating elements $32a_2$, $32b_2$, $32c_2$, and $32d_2$ is connected to a microwave switch pair $44a_2$, $44b_2$, $44c_2$ and $44d_2$, respectively. Each microwave switch pair $44a_2$, $44b_2$, $44c_2$ and $44d_2$, which is controlled via control cables $26_2$, allows for the switching of the microwave signal between two paths: a first path having no interconnected components between the switches and, thus, negligible phase shift; and a second path having a delay line $46a_2$, $46b_2$, $46c_2$, and $46d_2$, respectively, interconnected between each switch pair $44a_2$, $44b_2$, $44c_2$ and $44d_2$, respectively. Delay lines $46a_2$, $46b_2$, $46c_2$, and $46d_2$, which are devices which induce a fixed or adjustable phase shift to the RF signal, are tuned for a calculated point of alignment for optimum system reliability. Additional transmission paths, each inducing a different amount of phase shift to the RF signal, may be added for each radiating element thereby increasing the angular flexibility of the antenna system.

As in the first embodiment, RF signal strength detector $22_2$ detects the strength of the RF signal, which is coupled off of the transmission line $18_2$ by RF coupler $20_2$. But in this embodiment, when the signal strength falls below a predetermined value, signal strength control unit $24_2$ transmits control signals via control cables $26_2$ to phase shifters $42a_2$, $42b_2$, $42c_2$, and $42d_2$, or, in the alternative, to microwave switch pairs $44a_2$, $44b_2$, $44c_2$, and $44d_2$ thereby changing the antenna main beam angle.

Each of the RF components discussed above may be mounted out of the way behind the reflector $16_2$ as shown in Figures 1 and 3, or, conversely, may be mounted directly within feed $12_2$ as shown in Figures 6, 8 and 9. In addition, the RF components which might include the RF to IF converter may be integrated with the radiating elements into one or more substrates.

Thus, it can be seen that an angle diversity antenna utilizing a phased array feed offset from the focal point of the antenna reflector may be utilized for changing the antenna launch angle corresponding to changes in atmospheric conditions. This results in an antenna having maximum angular flexibility with minimum RF transmission blockage. The resulting antenna has a high gain and a highly directive radiation pattern, both of which are crucial for a reliable communications system.

## Claims

1. An angle diversity antenna feed for radiating and receiving RF signals to and from an antenna reflector, the feed comprising:

      means for selectively radiating and receiving RF signals at one of a plurality of main beam angles, said radiating means comprising a plurality of radiating elements configured in a phased array;

      means for detecting the signal strength of a received RF signal and for providing an output in response there to; and

      means connected to said radiating means and the output of said signal strength detecting means for changing said main beam angle;

whereby said main beam angle changing means changes said main beam angle when said signal strength detecting means detects a signal strength below a predetermined level.

2. An angle diversity antenna feed as defined in claim 1, wherein said radiating means comprises at least two groups of radiating elements, each of said groups being positioned and aligned for radiating and receiving at a different main beam angle.

3. An angle diversity antenna feed as defined in claim 2, wherein said main beam angle changing means comprises switches for switching between said groups of radiating elements.

4. An angle diversity antenna feed as defined in claim 3, wherein said switches are PIN diode switches.

5. An angle diversity antenna feed as defined in claim 4, wherein said switches are mounted within said feed.

6. An angle diversity antenna feed as defined in claim 2, wherein said signal strength detecting means comprises a capacitive probe.

7. An angle diversity antenna feed as defined in claim 2, wherein said radiating elements are comprised of microstrip.

8. An angle diversity antenna feed as defined in claim 2, wherein each of said two groups of radiating elements comprises four radiating elements.

9. An angle diversity antenna feed as defined in claim 8, wherein each of said groups share at least one radiating element with another group.

10. An angle diversity antenna feed as defined in claim 2, wherein one of said groups is positioned in a focal point of said reflector, said one group being aligned for radiating and receiving RF signals at a predetermined main beam angle.

11. An angle diversity antenna feed as defined in claim 10, wherein each of the remaining groups is positioned and aligned for receiving and radiating at a main beam angle displaced from the main beam angle of said group positioned in the focal point.

12. An angle diversity antenna feed as defined in claim 1, wherein said radiating means comprises one group of radiating elements, said one group being positioned out of the focal point of said reflector.

13. An angle diversity antenna feed as defined in claim 12, wherein said main beam angle changing means comprises variable phase shifters connected to said radiating elements.

14. An angle diversity antenna feed as defined in claim 12, wherein said radiating elements are waveguide radiators.

15. An angle diversity antenna feed as defined in claim 12, wherein said main beam angle changing means comprises a plurality of switch pairs and a plurality of delay lines, said switch pairs and said delay lines being connected to said radiating elements.

16. An angle diversity antenna feed as defined in claim 15, wherein each switch pair and each delay line correspond to a radiating element.

17. An angle diversity antenna feed as defined in claim 16, wherein each switch pair and corresponding delay line define a first and a second transmission path for the RF signal, said first transmission path causing a negligible phase shift on the RF signal, said second transmission path causing a material phase shift on the RF signal.

18. An angle diversity antenna feed as defined in claim 17, wherein a delay line is in said second transmission path.

FIG.1

EP 0 480 157 A1

FIG. 2

FIG. 3

FIG. 4

FIG.5

FIG.6

FIG.7

FIG.8

FIG.9

European
Patent Office

EUROPEAN SEARCH
REPORT

Application Number

EP 91 11 4370

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-2 065 376 (MARCONI)<br>* figure 1; abstract *<br>– – – | 1 | H 04 B 7/10 |
| Y | US-A-4 755 826 (J.B.L. RAO)<br>* figure 1; column 2, lines 45-50 *<br>– – – | 1 | |
| A | PATENT ABSTRACTS OF JAPAN vol. 13, no. 166<br>(E-746)(3514), 20 April 1989;<br>& JP - A - 63318825 (NIPPON TELEGR & TELEPH CORP)<br>27.12.1988<br>– – – | | |
| A | PATENT ABSTRACTS OF JAPAN vol. 7, no. 229<br>(E-203)(1374), 12 October 1983;<br>& JP - A - 58119238 (NIPPON DENSHIN DENWA KOSHA)<br>15.07.1983<br>– – – – – | | |

| TECHNICAL FIELDS SEARCHED (Int. Cl.5) |
|---|
| H 04 B<br>H 01 Q |

The present search report has been drawn up for all claims

| Place of search | Date of completion of search | Examiner |
|---|---|---|
| Berlin | 02 December 91 | BREUSING J |